# EUROPÄISCHE PATENTSCHRIFT

(11) **EP 2 759 096 B1**
(45) Veröffentlichungstag und Bekanntmachung des Hinweises auf die Patenterteilung: **20.11.2019**
(21) Anmeldenummer: 12753421.2
(22) Anmeldetag: 07.08.2012
(51) Int. Cl.: H04L 12/403, H04L 29/08, G01D 21/00, G06F 13/40

(54) **VERFAHREN UND VORRICHTUNG ZUM KOPPELN EINES ERSTEN SENSORS MIT ZUMINDEST EINEM ZWEITEN SENSOR**
METHOD AND APPARATUS FOR COUPLING A FIRST SENSOR TO AT LEAST ONE SECOND SENSOR
PROCÉDÉ ET DISPOSITIF DE COUPLAGE D'UN PREMIER CAPTEUR AVEC AU MOINS UN DEUXIÈME CAPTEUR

(30) Priorität: 23.09.2011 DE 102011083254
(43) Veröffentlichungstag der Anmeldung: 30.07.2014
(73) Patentinhaber: Robert Bosch GmbH, 70442 Stuttgart (DE)
(72) Erfinder: SEIDEL, Jana, 71672 Marbach (DE); KOSSIRA, Martin, 71672 Marbach Am Neckar (DE); RUFF, Alex, 74189 Weinsberg (DE)
(86) Internationale Anmeldenummer: PCT/EP2012/065420
(87) Internationale Veröffentlichungsnummer: WO 2013/041296

(56) Entgegenhaltungen:
- WO-A1-2004/019146
- US-A1- 2007 195 808
- US-A1- 2009 092 112
- US-A1- 2009 141 741
- US-A1- 2010 118 737
- ZHOU B ET AL: "HDA: A hierarchical data aggregation scheme for sensor networks", COMPUTER COMMUNICATIONS, ELSEVIER SCIENCE PUBLISHERS BV, AMSTERDAM, NL, Bd. 29, Nr. 9, 31. Mai 2006 (2006-05-31), Seiten 1292-1299, XP027943618, ISSN: 0140-3664 [gefunden am 2006-05-31]

## Beschreibung

### Stand der Technik

Die vorliegende Erfindung bezieht sich auf ein Verfahren zum Koppeln eines ersten Sensors mit zumindest einem zweiten Sensor, auf eine entsprechende Vorrichtung sowie auf ein entsprechendes Computerprogrammprodukt.

Zur Abfrage herkömmlicher Sensoren über ein Bussystem werden die Sensoren individuell von einem Steuergerät abgefragt. Ebenfalls können die Sensoren ungeregelt Informationen über den Bus bereitstellen, die das Steuergerät bei Bedarf einlesen kann.

Beispielsweise beschreibt die DE 10 2009 029 217 A1 einen Inertialsensor mit einem Feldeffekttransistor, welcher eine Gate-Elektrode, eine Source-Elektrode, eine Drain-Elektrode und einen zwischen der Source-Elektrode und der Drain-Elektrode angeordneten Kanalbereich umfasst. Die Gate-Elektrode ist feststehend und der Kanalbereich ist beweglich ausgebildet.

Die US 2010/118737 A1 offenbart ein Verfahren und eine Vorrichtung zum Konstruieren eines synchronen Sensornetzwerks.

Die Druckschrift ZHOU B ET AL: "HDA: A hierarchical data aggregation scheme for sensor networks", COMPUTER COMMUNICATIONS, ELSEVIER SCIENCE PUBLISHERS BV, AMSTERDAM, NL, Bd. 29, Nr. 9, 31. Mai 2006, Seiten 1292-1299, offenbart einen Ansatz für ein hierarchisches Datenaggregationsschema für ein Sensornetzwerk.

Die Druckschrift WO 2004/019146 A1 offenbart ein eine Vorrichtung zur Übermittlung, zum Austausch und/oder zur Weiterleitung von Daten und/oder Informationen.

### Offenbarung der Erfindung

Vor diesem Hintergrund wird mit der vorliegenden Erfindung ein Verfahren zum Koppeln eines ersten Sensors mit zumindest einem zweiten Sensor, weiterhin eine Vorrichtung, die dieses Verfahren verwendet sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Unabhängig davon, ob einzelne Abfragen von Informationen oder eine kontinuierliche Bereitstellung der Information über einen Datenbus erfolgt, wird der Bus in beiden Fällen durch viel Datenkommunikation belastet, was eine Leistungsfähigkeit des Bussystems herabsetzen kann. Beispielsweise kann eine Anzahl von Sensoren in einem Zweig des Busses durch eine transportierbare Datenmenge über den Zweig des Datenbusses begrenzt sein. Zusätzlich kann über einen seriellen Bus immer nur eine Anfrage bearbeitet werden, wodurch eine zweite Anfrage nach der ersten Anfrage erfolgen muss. Dadurch kann sich ein Messzeitpunkt von Sensor zu Sensor verschieben. Messwerte der Sensoren bilden dann nicht mehr eine Größe zu ein und denselben Zeitpunkt ab.

Die Erfindung basiert auf der Erkenntnis, dass einer der Sensoren einer Anordnung von Sensoren administrative Aufgaben übernehmen kann, um den Datenbus zu entlasten. Dazu kann der Sensor als Master-Sensor über einen weiteren Bus mit Slave-Sensoren der Anordnung kommunizieren. Befehle auf dem weiteren Bus können universell für alle Sensoren gelten, oder an einen einzelnen Sensor adressiert sein. Der weitere Bus kann unabhängig von dem Datenbus sein. Der weitere Bus kann mit einem anderen Kommunikationsprotokoll arbeiten als der Datenbus. Beispielsweise kann der weitere Bus ein einfacheres Kommunikationsprotokoll verwenden.

Die vorliegende Erfindung schafft ein Verfahren zum Koppeln eines ersten Sensors mit zumindest einem zweiten Sensor gemäß des unabhängigen Anspruchs 1.

Unter einem Sensor kann ein Messwertgeber verstanden werden. Beispielsweise kann der Sensor ein Inertialsensor sein. Ein Signal kann ein Datenwort oder ein Impuls sein. Das Signal kann dazu ausgebildet sein, eine Information zu übermitteln. Das Signal kann an einen einzelnen Busteilnehmer adressiert sein oder für alle Busteilnehmer gelten oder empfangbar sein. Das erste Signal und das zweite Signal können in unterschiedlichen Datenformaten vorliegen. Der erste Sensor kann zumindest zwei Schnittstellen aufweisen, wobei die erste Schnittstelle mit dem zweiten Sensor verbunden ist und die zweite Schnittstelle mit dem Steuergerät verbunden ist. Der zweite Sensor kann eine, zwei oder mehrere Schnittstellen aufweisen, wobei der zweite Sensor auch mit dem Steuergerät verbunden sein kann. Das erste Signal kann ansprechend auf einen Ablauf einer vorgegebenen Zeitspanne gesendet werden.

Das zweite Signal kann ebenfalls an das Steuergerät ausgegeben werden. Dadurch kann das Steuergerät die Messwerte unverändert zur Auswertung empfangen.

Das zweite Signal kann an den ersten Sensor ausgegeben werden, und das dritte Signal kann zumindest den Messwert des ersten Sensors und den Messwert des zweiten Sensors enthalten. Der erste Sensor kann die Signale der Sensoren mit seinem eigenen Signal kombinieren (d.h. beispielsweise den eigenen Messwert mit dem Messwert des zweiten Sensors verknüpfen), um ein einzelnes Signal an das Steuergerät zu senden und den Bus zu entlasten.

Das dritte Signal kann zeitversetzt zum zweiten Signal ausgegeben werden. Dadurch kann Kommunikationssicherheit auf dem Datenbus herrschen. Der Messwert des zweiten Sensors kann nicht von dem Messwert des ersten Sensors verfälscht werden.

Im Schritt des Ausgebens kann zumindest ein weiteres Signal ausgegeben werden, wobei das zumindest eine weitere Signal eine ermittelte Größe aus dem Messwert des ersten Sensors und zumindest dem Messwert des zweiten Sensors enthält. Der erste Sensor kann die Messwerte weiterverarbeiten. Der erste Sensor kann die Messwerte filtern. Beispielsweise können die Messwerte erst bereitgestellt werden, wenn die Messwerte größer sind als vorgegebene Kriterien.

Das Verfahren kann einen Schritt des Plausibilisierens aufweisen, in dem der Messwert des ersten Sensors durch zumindest den Messwert des zweiten Sensors und/oder der Messwert des zweiten Sensors durch den Messwert des ersten Sensors plausibilisiert wird. Wenn für die Messwerte vergleichbare Ergebnisse erwartet werden, kann bei einer nicht erwarteten Abweichung der Ergebnisse voneinander ein Fehler erkannt werden. Dadurch kann ein Ausreißer bei den Messwerten erkannt werden. Ebenso kann ein Sensordefekt erkannt werden.

Der Schritt des Sendens kann ansprechend auf eine Abfrage des Steuergeräts erfolgen, und im Schritt des Sendens kann der Messwert des ersten Sensors ansprechend auf die Abfrage gemessen werden. Das dritte Signal kann weiter ansprechend auf das zweite Signal ausgegeben werden. Dadurch kann ein einheitlicher Messzeitpunkt für alle Sensoren festgelegt werden. Dann können zeitkritische Messaufgaben sicher zeitgleich erfolgen.

Das erste Signal kann ein anderes Datenformat aufweisen als das dritte Signal. Das erste Signal kann auch das gleiche Datenformat aufweisen wie das dritte Signal. Der erste Sensor kann zwei gleiche Schnittstellen aufweisen. Das dritte Signal kann eine größere Bandbereite aufweisen, als das erste Signal. Das dritte Signal kann dazu ausgebildet sein, den Messwert zumindest des ersten Sensors mit einer hohen Genauigkeit darzustellen.

Im Schritt des Bereitstellens kann ansprechend auf das erste Signal der Messwert des zweiten Sensors erfasst werden und zum Senden bereitgestellt werden, wobei das Senden ansprechend auf ein viertes Signal des ersten Sensors erfolgt. Hierdurch kann der Datenbus weiter entlastet werden, wenn der Messwert erst abgerufen wird, wenn er benötigt wird.

Die vorliegende Erfindung schafft ferner eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Fahrzeugs mit einem Sensorarray zur Verwendung gemäß einem Ausführungsbeispiel der vorliegenden Erfindung;
- Fig. 2: ein Ablaufdiagramm eines Verfahrens zum Koppeln eines ersten Sensors mit zumindest einem zweiten Sensor gemäß einem Ausführungsbeispiel der vorliegenden Erfindung;
- Fig. 3: eine Darstellung eines Sensorarrays gemäß einem Ausführungsbeispiel der vorliegenden Erfindung; und
- Fig. 4: eine Darstellung eines Sensorarrays gemäß einem weiteren Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

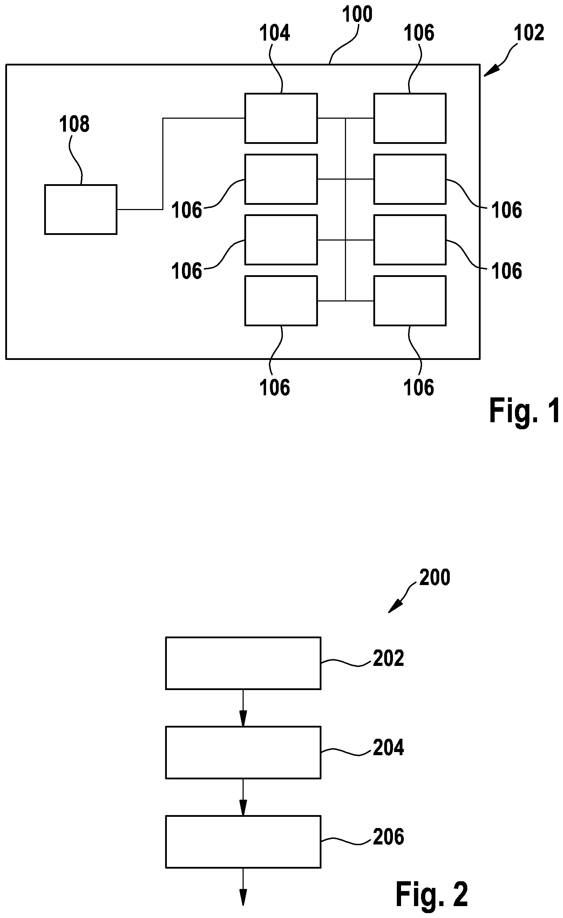

Fig. 1 zeigt ein Fahrzeug 100 mit einem Sensorarray 102 aus acht Sensoren 104, 106 gemäß einem Ausführungsbeispiel der vorliegenden Erfindung. Eine Information des Sensorarrays 102 wird von einem Steuergerät 108 verwendet. Die Sensoren 104, 106 des Sensorarrays 102 sind untereinander mit einem ersten Datenbus verbunden. Einer der Sensoren 104, 106 ist als Master-Sensor 104 über einen zweiten Datenbus mit dem Steuergerät 108 verbunden. Die anderen Sensoren 106 sind Slave-Sensoren 106. Der Master-Sensor 104 ist dazu ausgebildet, ein erstes Signal über den ersten Datenbus an die Slave-Sensoren 106 zu senden. Die Slave-Sensoren 106 sind in diesem Ausführungsbeispiel dazu ausgebildet, über den ersten Datenbus je ein zweites Signal bereitzustellen, nachdem sie das erste Signal empfangen haben. Das zweite Signal repräsentiert oder enthält dabei zumindest je einem Messwert des jeweiligen Sensors 106. Der Master-Sensor 104 ist dazu ausgebildet, um ansprechend auf ein Empfangen der zweiten Signale über den ersten Datenbus ein drittes Signal über den zweiten Datenbus für das Steuergerät 108 auszugeben. Das dritte Signal repräsentiert oder enthält in diesem Ausführungsbeispiel zumindest die Messwerte der Sensoren 106 und einen Messwert des Sensors 104. Das dritte Signal kann auch erst ausgegeben werden, wenn das Steuergerät 108 ein entsprechendes Anforderungssignal über den zweiten Datenbus sendet.

Fig. 2 zeigt ein Ablaufdiagramm eines Verfahrens 200 zum Koppeln eines ersten Sensors mit zumindest einem zweiten Sensor gemäß einem Ausführungsbeispiel der vorliegenden Erfindung. Das Verfahren 200 kann auf einem Sensorarray wie in Fig. 1 gezeigt ausgeführt werden. Das Verfahren 200 weist einen Schritt des Sendens 202, einen Schritt des Bereitstellens 204 sowie einen Schritt des Ausgebens 206 auf. Im Schritt des Sendens 202 sendet der erste Sensor ein erstes Signal an den zweiten Sensor oder mehrere Sensoren. Das erste Signal kann als Triggersignal für einen Messzeitpunkt der Sensoren verstanden werden. Durch das erste Signal wird in dem zweiten Sensor oder den mehreren Sensoren eine Messung zumindest einer zu messenden Größe ausgelöst und in einem Messwert abgebildet. Im Schritt des Bereitstellens 204 wird von dem zweiten Sensor oder den mehreren Sensoren ein zweites Signal bereitgestellt, das den Messwert repräsentiert oder enthält. Das zweite Signal kann ein Datenwort oder mehrere Datenwörter umfassen. Das zweite Signal wird ansprechend auf ein Empfangen des ersten Signals bereitgestellt. Ein Zeitpunkt der Bereitstellung kann um eine vorbestimmte Zeitdauer verzögert werden. Ebenfalls kann das zweite Signal auf Abruf bereitgestellt werden. Das zweite Signal kann mittels eines weiteren Signals des ersten Sensors beispielsweise von jedem der weiteren Sensoren einzeln abgerufen werden. Im Schritt des Ausgebens 206 wird von dem ersten Sensor ein drittes Signal an ein übergeordnetes Steuergerät ausgegeben. Das dritte Signal repräsentiert oder enthält zumindest einen Messwert des ersten Sensors. Das dritte Signal kann ein Datenwort oder mehrere Datenwörter umfassen. Der Messwert des ersten Sensors kann zum selben Messzeitpunkt erfasst worden sein, wie die anderen Messwerte. Das dritte Signal kann zum Abrufen bereitgehalten werden, und ansprechend auf ein Kommando des Steuergeräts ausgegeben werden. Wenn das zweite Signal des zweiten Sensors oder der mehreren Sensoren von dem ersten Sensor empfangen worden sind, kann das dritte Signal auch die Messwerte der weiteren Sensoren oder den Messwert des zweiten Sensors repräsentieren oder enthalten. Der erste Sensor kann auch die Messwerte weiterverarbeiten. Beispielsweise kann der erste Sensor eine Fehleranalyse der Messungen durchführen und fehlerhafte Messwerte unterdrücken. Ebenso kann der erste Sensor die Messwerte zur Gewinnung zumindest eines (indirekten) Parameters verwenden, der auch in dem dritten Signal repräsentiert sein kann.

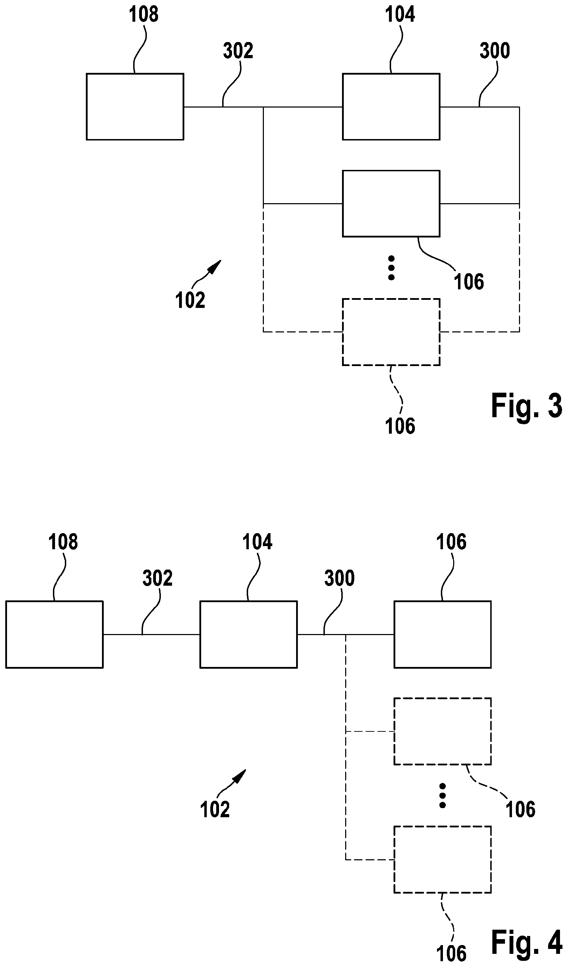

Fig. 3 zeigt eine Darstellung eines Sensorarrays 102 gemäß einem Ausführungsbeispiel der vorliegenden Erfindung. Das Sensorarray 102 ist dazu ausgebildet, ein Verfahren zum Koppeln eines ersten Sensors mit zumindest einem zweiten Sensor, wie es in Fig. 2 dargestellt ist durchzuführen. Das Sensorarray 102 weist wie in Fig. 1 dargestellt einen ersten Sensor 104 als Master-Sensor auf. Ferner weist das Sensorarray 102 zumindest einen zweiten Sensor 106 als Slave-Sensor auf. Das Sensorarray 102 kann, wie hier gestrichelt dargestellt eine Mehrzahl von Slave-Sensoren 106 aufweisen, die analog zu dem dargestellten Slave-Sensor 106 betrieben werden können. Der Slave-Sensor 106 und die möglichen weiteren Slave-Sensoren 106 sind in diesem Ausführungsbeispiel anders als in Fig. 1 parallel zu dem Maste-Sensor 104 mit dem ersten Datenbus 300 und dem zweiten Datenbus 302 verbunden. Der zweite Datenbus 302 ist mit dem Steuergerät 108 verbunden. In diesem Ausführungsbeispiel wird das zweite Signal direkt auf dem zweiten Datenbus 302 bereitgestellt und kann direkt vom Steuergerät 108 empfangen werden. Der erste Datenbus 300 dient hier nur der Kommunikation der Sensoren 104, 106 untereinander. Der erste Datenbus 300 kann beispielsweise ein SPI-Bus sein. Der zweite Datenbus 302 kann beispielsweise ein PSI- oder CAN-Bus sein.

Fig. 4 zeigt eine Darstellung eines weiteren Sensorarrays 102 gemäß einem weiteren Ausführungsbeispiel der vorliegenden Erfindung. Das Sensorarray 102 ist dazu ausgebildet, ein Verfahren zum Koppeln eines ersten Sensors mit zumindest einem zweiten Sensor, wie es in Fig. 2 dargestellt ist durchzuführen. Das Sensorarray 102 weist wie in Fig. 1 dargestellt einen ersten Sensor 104 als Mastersensor auf. Ferner weist das Sensorarray 102 zumindest einen zweiten Sensor 106 als Slave-Sensor auf. Das Sensorarray 102 kann, wie hier gestrichelt dargestellt eine Mehrzahl von Slave-Sensoren 106 aufweisen, die analog zu dem dargestellten Slave-Sensor 106 betrieben werden können. Der Slave-Sensor 106 und die möglichen weiteren Slave-Sensoren 106 sind in diesem Ausführungsbeispiel wie in Fig. 1 gezeigt, in Reihe über den ersten Datenbus 300 mit dem Mastersensor 104 verbunden. Der zweite Datenbus 302 verbindet den Mastersensor 104 mit dem Steuergerät 108. In diesem Ausführungsbeispiel wird das zweite Signal auf dem ersten Datenbus 300 bereitgestellt. Der Mastersensor 104 verarbeitet die Messwerte und stellt das dritte Signal über den zweiten Datenbus 302 für das Steuergerät 108 bereit.

Die Figuren 1 bis 4 zeigen Ausführungsbeispiele einer Kopplung mehrerer Sensoren zum Zwecke der Synchronisierung oder des Datenaustauschs gemäß verschiedenen Ausführungsbeispielen der vorliegenden Erfindung. Die hier dargestellten Slave-Sensoren 106 können beispielsweise Inertialsensoren sein, die typischerweise mit einer einzelnen Schnittstelle (CAN, SPI, PSI o.ä.) versehen sind, um herkömmlicherweise mit einem - seine Daten verarbeitenden - Steuergerät zu kommunizieren. Die Sensoren 104, 106 können auch als Sensoren ausgeführt sein, die zwei Schnittstellen unterstützen. Beispielsweise können die CAN- und SPI-Schnittstelle unterstützt werden. Die Sensoren 104, 106 können auch drei Schnittstellen unterstützen. Beispielsweise können somit auch die SPI-, CAN- und PSI-Schnittstelle unterstützt werden. Die Sensoren 104, 106 können auch einen programmierbaren Mikrocontroller-Kern aufweisen, wodurch die Realisierung der hier beschriebenen Funktionalitäten erleichtert wird. Bei dem hier vorgestellten Ansatz kann eine dieser Schnittstellen 300, 302 (beispielsweise die SPI-Schnittstelle 300) auch für die Kommunikation von Sensoren untereinander genutzt werden. In den dargestellten Ausführungsbeispielen sind die Sensoren untereinander über SPI verbunden. Ein Sensor 104 agiert als SPI-Master 104 und kann mit den anderen Sensoren 106, die als SPI-Slave 106 arbeiten, kommunizieren. Dadurch können alle verbundenen Sensoren 104, 106 gemeinsam (als Cluster) agieren bzw. aufeinander reagieren.

Durch eine Synchronisierung der verbundenen Sensoren 104, 106 untereinander (getriggert durch den SPI-Master 104) können Signalwerte in alle beteiligten Sensoren 104,0106 zeitgleich (einmalig, wie zyklisch) erfasst werden, um konsistente Signalverläufe zu erhalten. Weiterhin können die beteiligten Sensoren jeweils direkt mit dem Steuergerät kommunizieren, z.B. über PSI, sind hierbei Kommunikationsschemata möglich, die über die im Bus 302 selbst gegebenen Möglichkeiten hinausgehen. Beispielsweise kann durch abwechselndes Senden im gleichen Zeitschlitz ein Zeitmultiplexen realisiert werden. Dadurch kann ein Cross-talk, also eine gegenseitige Störung der Signale verhindert werden. Durch zwei PSI-Sender im asynchronen PSI-Modus (ohne Sync-Puls durch das Steuergerät 108) kann die Kommunikation nach außen (zum Steuergerät 108) erfolgen, wenn der Bus 302 keine Synchronisationsmechanismen bietet.

Für eine Datensammlung (im Master-Sensor 104) ist es möglich einen Sensor-Cluster 102 darzustellen. Das heißt, dass nur einer der verbundenen Sensoren 104, 106 nach außen kommuniziert. Dieser Sensor 104 fragt die Daten der anderen Sensoren 106 bei diesen ab und verschickt deren Signalwerte gemeinsam mit den eigenen über die eine externe Schnittstelle ans Steuergerät 108. Dadurch lassen sich Sensoren, die nur eine SPI-Schnittstelle besitzen, ohne Zusatzkosten einbinden. Der Sensor-Cluster 102 (aus den mehreren verbundenen Sensoren 104, 106) tritt als einzelner Busteilnehmer auf. Bei einem CAN-Bus ergibt sich eine einfachere Bustopologie mit nur einem CAN-Controller, einem Transceiver, einem Stecker, etc. Daraus resultieren geringere Stück- und Verdrahtungskosten. Bei einem PSI-Bus ergibt sich eine Reduktion auf nur einen Sender und es ist keine Synchronisation mehrerer Sender erforderlich. Es ist nur ein Stecker, etc. erforderlich, was ebenfalls zu geringeren Stück- und Verdrahtungskosten führt. Die Daten der mehreren Sensoren 104, 106 lassen sich gemeinsam in möglichst wenigen Nachrichten verschicken. Das führt zu weniger Kommunikations-Overhead und einer geringeren Buslast. Eine gleichzeitige Übertragung mehrerer gleichzeitig erfasster Signalwerte ist möglich.

Bei einer Datenfusion im Master-Sensor 104 kann der Master-Sensor 104 zusätzlich zu den bisher dargestellten Möglichkeiten der Datensammlung die gesammelten Daten auch selbst verarbeiten bzw. auswerten, um die Datenqualität zu erhöhen. Eine Plausibilisierung abhängiger Signalwerte und/oder eine Berechnung zusätzlicher Signale, z.B. eine Drehbeschleunigung aus einer erfassten Drehrate, ist bereits im Sensor-Cluster 102 möglich. Ebenso ist eine Ableitung neuer Signale im Rahmen einer Modellbildung oder eine Zusammenfassung mehrfach erfasster Signale zur Verbesserung der Signalqualität möglich.

Durch den Austausch zusätzlicher Daten, z.B. von Signalrohwerten, einer redundanten Verarbeitung in mehreren der beteiligten Sensoren und einem abschließenden Vergleich kann eine gegenseitige Überwachung der Sensoren 104, 106 und eine deutliche Erhöhung der resultierenden Signalsicherheit erreicht werden.

Für die Synchronisierung sendet der Master-Sensor 104 (typischerweise zyklisch) ein Synchronisationssignal an alle verbundenen Sensoren 106, das diese zeitgleich empfangen, um eine gemeinsame Zeitbasis für zu synchronisierende Aktionen (in allen verbundenen Sensoren 104, 106) zu schaffen. Auf der Empfängerseite (den Slave-Sensoren 106) kann eine synchrone Aktion direkt ausgeführt werden, wenn das Synchronisationssignal empfangen wird. Ein Beispiel wäre die parallele, synchrone Signalwerterfassung (während das Einsammeln der erfassten Werte durch den Master-Sensor 106 danach sequentiell erfolgen würde)
Es kann auch ein Abgleichen der internen Zeitbasis auf die Master-Sensor-Zeitbasis erfolgen, um ein Auseinanderlaufen der verschiedenen Zeitbasen zu verhindern. Auf Basis der -dann synchronen- Zeitbasen können die beteiligten Sensoren 104, 106 zu aufeinander abgestimmten Zeitpunkten ihre jeweiligen Nachrichten an das Steuergerät 108 senden. Dabei kann Zeitmultiplexen (abwechselndes Senden im gleichen Zeitschlitz) oder zwei PSI-Sender im asynchronen PSI-Modus (ohne Sync-Puls durch das Steuergerät) als Modus durchgeführt werden.

Die Datensammlung (im Master-Sensor 104) kann durch den nach außen kommunizierenden Master-Sensor 106 erfolgen. Der Sensor 104 fragt die Daten der anderen Sensoren 106 ab und verschickt deren Signalwerte gemeinsam mit den eigenen über die eine externe Schnittstelle ans Steuergerät 108. Dabei können das interne (zwischen den Sensoren 104, 106) und das externe Nachrichten- und Datenformat voneinander abweichen, um eine nach außen einheitliche Darstellung der verschiedenen Signale zu erreichen.

Zusätzlich zu den oben schon aufgeführten Vorteilen, kann der Master-Sensor 104 auch eine (aus Slave-Sensor-Sicht) von außen zu steuernde Initialisierungssequenz der anderen Sensoren 106 durchführen, ohne dass dies beim Steuergerät 108 sichtbar wird. Im Kontext der Datensammlung kann der Master-Sensor 104 auch als zentraler Speicher (des Sensorclusters 102) für Abgleichdaten dienen, die er den anderen Sensoren 106 im Rahmen der Initialisierung übergibt oder selbst zur Kompensation der eingelesenen Signalwerte der Slave-Sensoren 106 verwendet.

Die Datenfusion (im Master-Sensor 104) erfordert eine entsprechende Leistungsfähigkeit des Master-Sensors 104, z.B. in Form eines programmierbaren Mikrocontroller-Cores. Damit lässt sich neben den bereits oben aufgeführten Funktionen zusätzlich eine Plausibilisierung abhängiger Signalwerte, eine Berechnung zusätzlicher Signale, z.B. Drehbeschleunigung aus einer erfassten Drehrate, eine Ableitung neuer Signale im Rahmen einer Modellbildung und eine Zusammenfassung mehrfach erfasster Signale zur Verbesserung der Signalqualität, bereits im Sensor-Cluster verwirklichen. Es lassen sich auch sehr flexibel weitere Funktionalitäten auf Basis der insgesamt verfügbaren Signale darstellen.

Durch den Austausch zusätzlicher Daten, z.B. von Signalrohwerten, einer redundanten Verarbeitung in mehreren der beteiligten Sensoren 104, 106 und abschließendem Vergleich kann eine deutliche Erhöhung der resultierenden Signalsicherheit erreicht werden. Hierbei kann sich die Redundanz bzw. Überwachung je nach Sicherheitsanforderungen bzw. -konzept von den Signalrohwerten bis zur Ausgabe an das Steuergerät erstrecken. Eine gegenseitige Überwachung ist in beiden Konfigurationen (aus Fig. 3 und Fig. 4) möglich.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Koppeln eines ersten Sensors (104) als Master- Sensor mit zumindest einem zweiten Sensor (106) als Slave-Sensor, wobei das Verfahren (200) die folgenden Schritte umfasst:
Senden (202) eines ersten Signals von dem ersten Sensor (104) an den zumindest einen zweiten Sensor (106);
Bereitstellen (204) eines zweiten Signals durch den zweiten Sensor (106), ansprechend auf das erste Signal, wobei das zweite Signal einen Messwert des zweiten Sensors (106) enthält; und
Ausgeben (206) eines dritten Signals an ein Steuergerät (108) durch den ersten Sensor (104), wobei das dritte Signal zumindest einen Messwert des ersten Sensors (104) enthält,
**dadurch gekennzeichnet, dass**
das erste Signal ein anders Datenformat aufweist, als das dritte Signal, wobei das erste Signal mittels eines SPI-Busses (300) übertragen wird und das dritte Signal mittels eines PSI- oder CAN-Busses (302) übertragen wird.

2. Verfahren (200) gemäß Anspruch 1, bei dem im Schritt des Bereitstellens (204) das zweite Signal an das Steuergerät (108) ausgegeben.

3. Verfahren (200) gemäß Anspruch 1, bei dem im Schritt des Bereitstellens (204) das zweite Signal an den ersten Sensor (104) ausgegeben wird, und das dritte Signal zumindest den Messwert des ersten Sensors (104) und den Messwert des zweiten Sensors (106) enthält.

4. Verfahren (200) gemäß einem der vorhergehenden Ansprüche, bei dem im Schritt des Ausgebens (206) das dritte Signal zeitversetzt zum zweiten Signal ausgegeben wird.

5. Verfahren (200) gemäß einem der vorhergehenden Ansprüche, bei dem im Schritt des Ausgebens (206) zumindest ein weiteres Signal ausgegeben wird, wobei das zumindest eine weitere Signal eine ermittelte Größe aus dem Messwert des ersten Sensors (104) und zumindest dem Messwert des zweiten Sensors (106) enthält.

6. Verfahren (200) gemäß einem der vorhergehenden Ansprüche, mit einem Schritt des Plausibilisierens, in dem der Messwert des ersten Sensors (104) durch zumindest den Messwert des zweiten Sensors (106) und/oder der Messwert des zweiten Sensors durch den Messwert des ersten Sensors plausibilisiert wird.

7. Verfahren (200) gemäß einem der vorhergehenden Ansprüche, bei dem der Schritt des Sendens (202) ansprechend auf eine Abfrage des Steuergeräts (108) erfolgt, und im Schritt des Sendens (202) der Messwert des ersten Sensors (104) ansprechend auf die Abfrage gemessen wird.

8. Verfahren (200) gemäß einem der vorhergehenden Ansprüche, bei dem im Schritt des Bereitstellens (204) ansprechend auf das erste Signal der Messwert des zweiten Sensors (106) erfasst wird und zum Senden bereitgestellt wird, wobei das Senden ansprechend auf ein viertes Signal des ersten Sensors (104) oder des Steuergeräts (108) erfolgt.

9. Vorrichtung (102), die ausgebildet ist, um die Schritte eines Verfahrens (200) gemäß einem der Ansprüche 1 bis 8 durchzuführen.

10. Computer-Programmprodukt mit Programmcode zur Durchführung des Verfahrens nach einem der Ansprüche 1 bis 8, wenn das Programm auf einer Vorrichtung ausgeführt wird.

## Claims

1. Method (200) for coupling a first sensor (104) as a master sensor to at least one second sensor (106) as a slave sensor, wherein the method (200) comprises the following steps:
transmitting (202) a first signal from the first sensor (104) to the at least one second sensor (106);
providing (204) a second signal by means of the second sensor (106) in response to the first signal, wherein the second signal contains a measured value from the second sensor (106); and
outputting (206) a third signal to a control device (108) by means of the first sensor (104), wherein the third signal contains at least one measured value from the first sensor (104),
**characterized in that**
the first signal has a different data format to the third signal, wherein the first signal is transmitted by means of an SPI bus (300) and the third signal is transmitted by means of a PSI or CAN bus (302).

2. Method (200) according to Claim 1, in which, in the providing step (204), the second signal is output to the control device (108).

3. Method (200) according to Claim 1, in which, in the providing step (204), the second signal is output to the first sensor (104) and the third signal contains at least the measured value from the first sensor (104) and the measured value from the second sensor (106).

4. Method (200) according to one of the preceding claims, in which, in the outputting step (206), the third signal is output in a delayed manner with respect to the second signal.

5. Method (200) according to one of the preceding claims, in which, in the outputting step (206), at least one further signal is output, wherein the at least one further signal contains a variable determined from the measured value from the first sensor (104) and at least the measured value from the second sensor (106).

6. Method (200) according to one of the preceding claims, having a plausibility-checking step in which the plausibility of the measured value from the first sensor (104) is checked by means of at least the measured value from the second sensor (106) and/or the plausibility of the measured value from the second sensor is checked by means of the measured value from the first sensor.

7. Method (200) according to one of the preceding claims, in which the transmitting step (202) is carried out in response to a request from the control device (108), and, in the transmitting step (202), the measured value from the first sensor (104) is measured in response to the request.

8. Method (200) according to one of the preceding claims, in which, in the providing step (204), the measured value from the second sensor (106) is captured in response to the first signal and is provided for transmission, wherein the transmission is carried out in response to a fourth signal from the first sensor (104) or from the control device (108) .

9. Apparatus (102) which is designed to carry out the steps of a method (200) according to one of Claims 1 to 8.

10. Computer program product having program code for carrying out the method according to one of Claims 1 to 8 when the program is executed on an apparatus.

## Revendications

1. Procédé (200) de couplage d'un premier capteur (104) en tant que capteur maître à au moins un deuxième capteur (106) en tant que capteur esclave, le procédé (200) comprenant les étapes suivantes :
envoi (202) d'un premier signal du premier capteur (104) à l'au moins un deuxième capteur (106) ;
fourniture (204) d'un deuxième signal par le deuxième capteur (106) en réaction au premier signal, le deuxième signal contenant une valeur mesurée du deuxième capteur (106) ; et
délivrance (206) d'un troisième signal à un contrôleur (108) par le premier capteur (104), le troisième signal contenant au moins une valeur mesurée du premier capteur (104),
**caractérisé en ce que**
le premier signal présente un format de données différent de celui du troisième signal, le premier signal étant transmis au moyen d'un bus SPI (300) et le troisième signal étant transmis au moyen d'un bus PSI ou CAN (302).

2. Procédé (200) selon la revendication 1, avec lequel, dans l'étape de fourniture (204), le deuxième signal est délivré au contrôleur (108).

3. Procédé (200) selon la revendication 1, avec lequel, dans l'étape de fourniture (204), le deuxième signal est délivré au premier capteur (104), et le troisième signal contient au moins la valeur mesurée du premier capteur (104) et la valeur mesurée du deuxième capteur (106).

4. Procédé (200) selon l'une des revendications précédentes, avec lequel, dans l'étape de délivrance (206), le troisième signal est délivré de manière décalée dans le temps par rapport au deuxième signal.

5. Procédé (200) selon l'une des revendications précédentes, avec lequel, dans l'étape de délivrance (206), au moins un signal supplémentaire est délivré, l'au moins un signal supplémentaire contenant une grandeur déterminée à partir de la valeur mesurée du premier capteur (104) et au moins de la valeur mesurée du deuxième capteur (106).

6. Procédé (200) selon l'une des revendications précédentes, comprenant une étape de vérification de la plausibilité dans laquelle la plausibilité de la valeur mesurée du premier capteur (104) est vérifiée par au moins la valeur mesurée du deuxième capteur (106) et/ou la plausibilité de la valeur mesurée du deuxième capteur est vérifiée par la valeur mesurée du premier capteur.

7. Procédé (200) selon l'une des revendications précédentes, avec lequel l'étape d'envoi (202) a lieu en réaction à une interrogation du contrôleur (108) et, dans l'étape d'envoi (202), la valeur mesurée du premier capteur (104) est mesurée en réaction à l'interrogation.

8. Procédé (200) selon l'une des revendications précédentes, avec lequel, dans l'étape de fourniture (204), la valeur mesurée du deuxième capteur (106) est acquise en réaction au premier signal et mise à disposition pour l'envoi, l'envoi étant effectué en réaction à un quatrième signal du premier capteur (104) ou du contrôleur (108).

9. Dispositif (102) qui est configuré pour exécuter les étapes d'un procédé (200) selon l'une des revendications 1 à 8.

10. Produit de programme informatique comprenant un code de programme destiné à mettre en œuvre le procédé selon l'une des revendications 1 à 8 lorsque le programme est exécuté sur un dispositif.
